(19) Europäisches Patentamt
European Patent Office
Office européen des brevets

(11) **EP 4 768 280 A1**

(12) **EUROPEAN PATENT APPLICATION**

(43) Date of publication:
**01.07.2026 Bulletin 2026/27**

(21) Application number: **25207478.6**

(22) Date of filing: **08.10.2025**

(51) International Patent Classification (IPC):
**B60C 11/03** (2006.01) **B60C 11/12** (2006.01)
**B60C 11/13** (2006.01)

(52) Cooperative Patent Classification (CPC):
**B60C 11/0306; B60C 11/0309; B60C 11/0323;
B60C 11/1236; B60C 11/125; B60C 11/1384;
B60C 11/1392;** B60C 2011/0348; B60C 2011/0353;
B60C 2011/0355; B60C 2011/0358;
B60C 2011/0362; B60C 2011/0372; B60C 2200/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.12.2024 JP 2024229000**

(71) Applicant: **SUMITOMO RUBBER INDUSTRIES,
LTD.**
**Kobe-shi, Hyogo 651-0072 (JP)**

(72) Inventor: **MORI, KAZUMA**
**Hyogo, 651-0072 (JP)**

(74) Representative: **Forresters IP LLP**
**Skygarden**
**Erika-Mann-Straße 11**
**80636 München (DE)**

(54) **HEAVY DUTY TIRE**

(57) A heavy duty tire 2 includes a tread 4 having one or more center circumferential grooves 16. A center portion 28 of the tread 4 includes center land portions 22 each including lateral grooves 32 arranged in the center portion 28 such that a reference lateral groove and a corresponding lateral groove respectively located on one side and another side in a circumferential direction constitute one lateral groove pair. Second and first ends Es and Ef of the reference lateral groove and the corresponding lateral groove in the lateral groove pair are at the same position in the circumferential direction. The one or more center circumferential grooves 16 include at least one circumferential narrow groove 44 having a pair of wall surfaces 44S that come into contact with each other at a narrow groove portion 48 when the tread 4 comes into contact with a road surface and becomes deformed.

Fig. 1

**Description**

BACKGROUND OF THE INVENTION

Field of the Invention

The present invention relates to a heavy duty tire.

Background Art

In order to improve drainage performance and wet performance, the tread of a tire is provided with transverse grooves and transverse sipes (hereinafter referred to as lateral grooves) that traverse land portions in addition to grooves that extend in the circumferential direction.

Lateral grooves are involved in the generation of noise. When lateral grooves are provided, there is a concern that noise increases.

For example, in a heavy duty tire disclosed in Japanese Laid-Open Patent Publication No. 2023-146910, in order to suppress noise generation and improve quietness while maintaining good wet performance, it is considered to arrange lateral grooves aligned in the circumferential direction such that the lateral grooves are not interrupted in the circumferential direction, in other words, to seamlessly arrange lateral grooves aligned in the circumferential direction.

An object of the present invention is to provide a heavy duty tire that can achieve improvement of block chipping resistance while achieving both wet performance and quietness.

SUMMARY OF THE INVENTION

A heavy duty tire according to the present invention includes a tread configured to come into contact with a road surface. The tread has a plurality of circumferential grooves aligned in an axial direction. The plurality of circumferential grooves include two shoulder circumferential grooves located on outermost sides in the axial direction, and one or more center circumferential grooves located between the two shoulder circumferential grooves. A portion of the tread between the two shoulder circumferential grooves is a center portion. The center portion includes a plurality of center land portions separated by the one or more center circumferential grooves. Each of the plurality of center land portions includes a plurality of lateral grooves traversing the center land portion. The plurality of lateral grooves are aligned in a circumferential direction in each of the center land portions. Each of the plurality of lateral grooves has a first end located on one side in the circumferential direction and a second end located on another side in the circumferential direction. The plurality of lateral grooves are arranged in the center portion such that a reference lateral groove located on the one side in the circumferential direction and a corresponding lateral groove located on the other side in the circumferential direction, constitute one lateral groove pair. The second end of the reference lateral groove and the first end of the corresponding lateral groove in the lateral groove pair are at the same position in the circumferential direction. At least one of the one or more center circumferential grooves is a circumferential narrow groove. The circumferential narrow groove includes a body portion including a groove opening of the circumferential narrow groove. The body portion includes a narrow groove portion. A pair of wall surfaces of the circumferential narrow groove come into contact with each other at the narrow groove portion when the tread comes into contact with a road surface and becomes deformed.

According to the present invention, a heavy duty tire that can achieve improvement of block chipping resistance while achieving both wet performance and quietness, is obtained.

BRIEF DESCRIPTION OF THE DRAWINGS

FIG. 1 is a development view showing a part of a tread of a tire according to one embodiment of the present invention:
FIG. 2 is a cross-sectional view taken along a line II-II in FIG. 1;
FIG. 3 is a development view showing a part of a center portion;
FIG. 4 is a cross-sectional view taken along a line IV-IV in FIG. 1;
FIG. 5 is a cross-sectional view taken along a line V-V in FIG. 1; and
FIG. 6 is a cross-sectional view taken along a line VI-VI in FIG. 3.

DETAILED DESCRIPTION

Hereinafter, the present invention will be described in detail based on preferred embodiments with appropriate reference to the drawings.

The tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

In the present invention, a state in which the tread comes into contact with a road surface and becomes deformed is a state in which a tire is fitted on a standardized rim, the internal pressure of the tire is adjusted to a standardized internal pressure, and a standardized load is applied to the tire.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

The tread portion includes a tread as a component of the tire. Each sidewall portion includes a sidewall as a component of the tire. Each bead portion includes a bead as a component of the tire.

A center portion of the tread portion is also referred to as crown portion. A portion of the tread portion at an end thereof is also referred to as shoulder portion.

[Findings on Which Present Invention Is Based]

Land portions having lateral grooves include blocks separated by the lateral grooves. The inclination angles of the lateral grooves influence the lateral stiffness of the blocks.

As described above, in order to achieve both wet performance and quietness, it is considered to seamlessly arrange lateral grooves aligned in the circumferential direction. In the case of seamlessly arranging lateral grooves, the lateral grooves are arranged so as to be inclined with respect to the axial direction. The inclination angles of the lateral grooves are large, and thus the lateral stiffness of the blocks is lower than that of blocks defined by lateral grooves extending in the axial direction. If the lateral grooves are arranged seamlessly, the wear resistance and the steering stability of the tire may be reduced.

The blocks are formed with sharp corners. The sharp corners increase the risk of occurrence of chipping in the blocks. In the case of a heavy duty tire, the load acting on the tire is greater than that on a tire for a passenger car. There is a big concern about block chipping. The ground-contact pressure of the crown portion is high. The high ground-contact pressure further increases the risk of occurrence of block chipping. If no lateral grooves are provided, the risk of occurrence of block chipping can be reduced, but in this case, wet performance is reduced.

Therefore, the present inventor has conducted a thorough study for a technology capable of achieving improvement of block chipping resistance while achieving both wet performance and quietness, and thus has completed the present invention described below.

[Outline of Embodiment of Present Invention]

The present invention is directed to a heavy duty tire including a tread configured to come into contact with a road surface, wherein the tread has a plurality of circumferential grooves aligned in an axial direction, the plurality of circumferential grooves include two shoulder circumferential grooves located on outermost sides in the axial direction, and one or more center circumferential grooves located between the two shoulder circumferential grooves, a portion of the tread between the two shoulder circumferential grooves is a center portion, the center portion includes a plurality of center land portions separated by the one or more center circumferential grooves, each of the plurality of center land portions includes a plurality of lateral grooves traversing the center land portion, the plurality of lateral grooves are aligned in a circumferential direction in each of the center land portions, each of the plurality of lateral grooves has a first end located on one side in the circumferential direction and a second end located on another side in the circumferential direction, the plurality of lateral grooves are arranged in the center portion such that a reference lateral groove located on the one side in the circumferential direction and a corresponding lateral groove located on the other side in the circumferential direction, constitute one lateral groove pair, the second end of the reference lateral groove and the first end of the corresponding lateral groove in the lateral groove pair are at the same position in the circumferential direction, at least one of the one or more center circumferential grooves is a circumferential narrow groove, the circumferential narrow groove includes a body portion including a groove opening of the circumferential narrow groove, the body portion includes a narrow groove portion, and a pair of wall surfaces of the circumferential narrow groove come into contact with each other at the narrow groove portion when the tread comes into contact with a road surface and becomes deformed.

The tire of the present invention can achieve improvement of block chipping resistance while achieving both wet performance and quietness. The mechanism by which the tire achieves this effect has not been clarified but is inferred as follows.

In the tire, the lateral grooves are arranged seamlessly in the center portions of the tread. The tire can achieve improvement of quietness while maintaining good wet performance.

The lateral grooves traverse the center land portions. Each center land portion includes the blocks separated by the lateral grooves. Since the lateral grooves are arranged seamlessly, chipping may occur at each corner portion of each block which is located at a portion where the lateral groove joins the circumferential narrow groove.

At least one of the one or more center circumferential grooves provided in the center portion is a circumferential narrow groove. As described above, the pair of wall surfaces of the circumferential narrow groove come into contact with each other at the narrow groove portion when the tread comes into contact with a road surface and becomes deformed. Accordingly, the center land portions located on both sides of the circumferential narrow groove support each other. The apparent stiffness of the blocks constituting the center land portions is increased. Deformation of the corner portions of the blocks is suppressed. The tire can reduce the risk of occurrence of block chipping.

The tire can achieve improvement of block chipping resistance while achieving both wet performance and quietness.

Preferably, the reference lateral groove and the corresponding lateral groove that constitute the lateral groove pair are provided in the center land portions different from each other. In this case, the inclination angle of each lateral groove with respect to the axial direction can be set to a gentle angle while maintaining the seamless arrangement. In the tire, the lateral stiffness of the blocks separated by the lateral grooves can be increased while maintaining good quietness. The tire can improve wear resistance and steering stability. Since the risk of occurrence of block chipping can also be reduced, the tire can also improve block chipping resistance.

Preferably, the lateral grooves are inclined with respect to the circumferential direction, and an inclination angle of each of the lateral grooves with respect to the circumferential direction is 55 degrees or more and 85 degrees or less. In this case, the tire can improve quietness and block chipping resistance.

Preferably, the tread has a tread pattern formed by forming grooves including the plurality of circumferential grooves and the plurality of lateral grooves, on the tread, the tread pattern includes a plurality of pitch patterns aligned in the circumferential direction, and one of the lateral grooves is provided in each of the plurality of center land portions included in each of the pitch patterns. In this case, the tire can improve block chipping resistance while maintaining good wet performance.

Preferably, the lateral grooves provided in one of two adjacent center land portions and the lateral grooves provided in the other of the two adjacent center land portions are arranged alternately in the circumferential direction. In this case, in the tire, the lateral grooves can be arranged at a fixed distance in one center land portion. In the tire, the stiffness of the blocks separated by the lateral grooves can be increased. The tire can improve block chipping resistance.

Preferably, the lateral grooves are sipes. In this case, the blocks formed on both sides of each lateral groove support each other. The apparent stiffness of the blocks is increased. Deformation of the corner portions of the blocks is suppressed. The tire can improve block chipping resistance.

Preferably, each of the center land portions includes a plurality of blocks separated by the plurality of lateral grooves, each of the plurality of blocks includes an acute corner portion formed by the lateral groove intersecting the circumferential groove at an acute angle, and the acute corner portion has an inclined surface that is connected to a top surface of the block and is inclined with respect to the top surface. In this case, in the tire, the stiffness of the acute corner portion formed by the lateral groove intersecting the circumferential groove at an acute angle, among the corner portions of each block, can be increased. The tire can improve block chipping resistance.

Preferably, the body portion includes a tapered portion including the groove opening, the narrow groove portion is located radially inward of the tapered portion, and the tapered portion is tapered from the groove opening toward the narrow groove portion. In this case, an increase in the ground-contact pressure at the groove opening of the circumferential narrow groove is suppressed. The tire can improve block chipping resistance.

Preferably, the circumferential narrow groove includes a widened portion located radially inward of the body portion, and the circumferential narrow groove has a minimum width at the narrow groove portion and has a maximum width at the widened portion. In this case, the widened portion can contribute to suppressing a decrease in drainage performance caused by employing the circumferential narrow groove as the circumferential groove. The tire can maintain good wet performance.

Preferably, a depth DHB of the body portion, a depth DGy of the lateral groove, and a depth DHX from the groove opening to a position where the widened portion has the maximum width satisfy the following formula,

$$DHB \leq DGy \leq DHX.$$

In this case, in a process in which the width of the widened portion increases from when the widened portion becomes exposed due to wear until the maximum width position of the widened portion becomes exposed, there are lateral grooves that can contribute to wet performance and quietness. The tire can maintain good wet performance and good quietness even in a worn state.

As described above, according to the present invention, a heavy duty tire that can achieve improvement of block chipping resistance while achieving both wet performance and quietness is obtained. This will be described in detail below.

[Details of Embodiment of Present Invention]

[Tire]

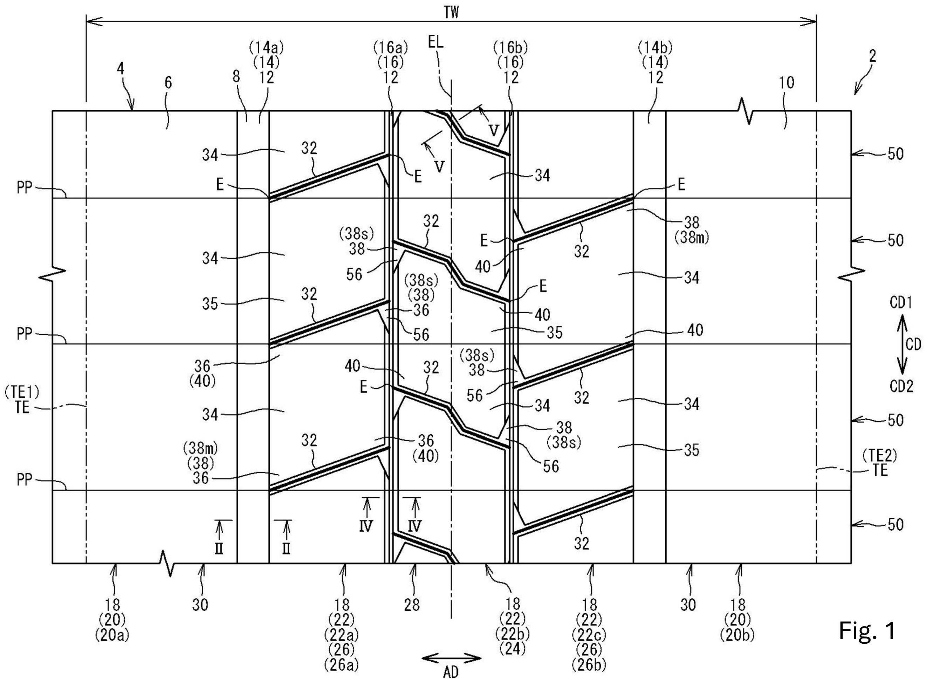

FIG. 1 is a plan view illustrating a development of a part of a tread 4 of a tire 2 according to one embodiment of the present invention. The tire 2 is mounted to a vehicle such as a truck and a bus. The tire 2 is a heavy duty tire.

In FIG. 1, a direction indicated by a double-headed arrow AD is the axial direction of the tire 2. The axial direction of the tire 2 means a direction parallel to the rotation axis (not shown) of the tire 2. A direction indicated by a double-headed arrow CD is the circumferential direction of the tire 2. The circumferential direction of the tire 2 is also the rotation direction of the tire 2. A direction perpendicular to the surface of the drawing sheet of FIG. 1 is the radial direction of the tire 2.

In FIG. 1, an alternate long and short dash line EL extending in the circumferential direction represents the equator plane of the tire 2.

In the axial direction, a direction away from the equator plane EL corresponds to the axially outer side of the tire 2, and a direction approaching the equator plane EL corresponds to the axially inner side of the tire 2.

A direction indicated by an arrow CD1 corresponds to a first circumferential side of the tire 2, and a direction indicated by an arrow CD2 corresponds to a second circumferential side of the tire 2. When the first circumferential side is defined as one side in the circumferential direction, the second circumferential side is the other side in the circumferential direction. When the second circumferential side is defined as one side, the first circumferential side is the other side.

In this specification, the first circumferential side means one side in the circumferential direction. The second circumferential side means the other side in the circumferential direction.

The tire 2 includes the tread 4. The tread 4 forms the internal structure of the tire 2.

In the present invention, the internal structure of the tire 2 is not limited to any particular internal structure. Although not described in detail, the tire 2 has an internal structure that is common as the internal structure of a heavy duty tire.

The tread 4 is formed from a crosslinked rubber. The tread 4 is located on the outermost side of the tire 2 in the radial direction. The tread 4 comes into contact with a road surface. The tread 4 extends in the circumferential direction. The outer circumferential surface of the tread 4 is a tread surface 6. The tread 4 has the tread surface 6. The tread 4 comes into contact with a road surface at the tread surface 6.

Grooves 8 are formed on the tread 4. Accordingly, a tread pattern is formed. Of the tread surface 6, a portion other than the grooves 8 is a land surface 10.

FIG. 1 shows an example of the tread pattern formed on the tread 4. The tread pattern of the present invention will be described with the tread pattern shown in FIG. 1 as an example. The tread pattern shown in FIG. 1 is the tread pattern of a new tire 2 that has not been worn.

The point of intersection of the tread surface 6 and the equator plane EL corresponds to an equator. In the case where the groove 8 is located on the equator plane EL, the equator is specified based on a virtual outer surface obtained on the assumption that the groove 8 is not provided on the equator plane EL.

Each alternate long and two short dashes line indicated by reference character TE represents an end of the tread surface 6.

In the tire, when the end of the tread surface cannot be identified from the appearance, a position, on the outer surface of the tire, corresponding to an axially outer end of a ground-contact surface obtained when a standardized load is applied to the tire in a standardized state and the tire is brought into contact with a flat surface with a camber angle being set to 0°, is used as the end of the tread surface.

In this specification, one end TE of the tread surface 6 located on the left side of the equator plane EL is referred to as first end TE1. Another end TE of the tread surface 6 located on the right side of the equator plane EL is referred to as second end TE2. The end TE located on the left side of the equator plane EL may be referred to as second end TE2, and the end TE located on the right side of the equator plane EL may be referred to as first end TE1.

In FIG. 1, a length indicated by reference character TW is the width of the tread surface 6. The width TW of the tread surface 6 is the distance in the axial direction from the first end TE1 to the second end TE2 of the tread surface 6. The width TW of the tread surface 6 is measured along the tread surface 6.

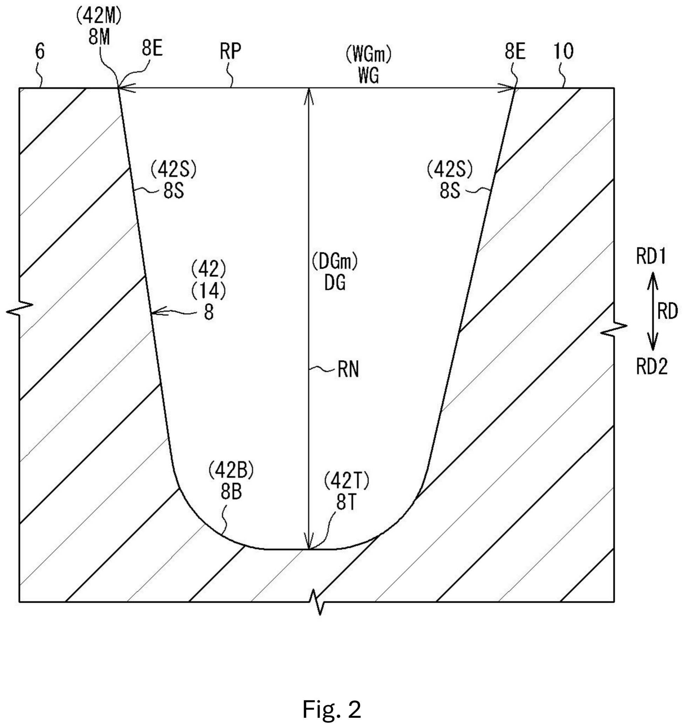

FIG. 2 is a cross-sectional view taken along a line II-II in FIG. 1. A direction indicated by a double-headed arrow RD is the radial direction of the tire 2. A direction indicated by an arrow RD1 corresponds to the radially outer side of the tire 2, and a direction indicated by an arrow RD2 corresponds to the radially inner side of the tire 2.

FIG. 2 shows a cross-section of the groove 8, specifically, a shoulder circumferential groove, which will be described later, taken along a plane perpendicular to the length direction of the shoulder circumferential groove. The main configuration of the groove 8 will be described with reference to FIG. 2. In this specification, the cross-section of the groove 8 is represented as a cross-section of the groove 8 taken along a plane perpendicular to the length direction of the groove 8.

The groove 8 has a pair of wall surfaces 8S including a groove opening 8M, and a bottom surface 8B including a groove bottom 8T. The groove opening 8M is formed by a pair of edges 8E. In other words, the groove opening 8M has a pair of edges 8E. Each edge 8E is the boundary between the land surface 10 and the groove 8. Each of the pair of wall surfaces 8S extends between the edge 8E and the bottom surface 8B.

The groove bottom 8T is represented by a position at which the distance from a reference plane RP to the bottom surface 8B is the largest. The distance from the reference plane RP to the bottom surface 8B is measured along a normal line of the reference plane RP. Unless otherwise specified, a plane including the groove opening 8M is used as the reference plane RP. In the case where the bottom surface 8B is a flat surface, the groove bottom 8T is represented by the groove center of the bottom surface 8B. In the case where a protrusion is provided on the bottom surface 8B, the groove bottom 8T is specified based on a virtual bottom surface obtained by assuming that no protrusion is present thereon.

A normal line, of the reference plane RP, connecting the reference plane RP and the groove bottom 8T is a reference normal line RN, and the direction of the reference normal line RN is the depth direction of the groove 8.

The width of the groove 8 is represented as the distance (hereinafter referred to as inter-wall surface distance) between one wall surface 8S and another wall surface 8S. Unless otherwise specified, the inter-wall surface distance is measured along a line orthogonal to the reference normal line RN. When the profile of the tread surface 6 can be confirmed, the groove bottom 8T and the width of the groove 8 may be specified with the profile of the tread surface 6 as the reference plane RP.

In FIG. 2, a length indicated by a double-headed arrow WG is the width of the groove 8 at the groove opening 8M. In the case where a portion of the groove 8 at the groove opening 8M is processed in a tapered manner, the width at the groove opening 8M of the groove 8 is represented based on virtual edges obtained on the assumption that the portion of the groove 8 at the groove opening 8M is not processed in a tapered manner. A length indicated by a double-headed arrow DG is the depth of the groove 8. Unless otherwise specified, the depth DG of the groove 8 is represented as the distance from the reference plane RP to the groove bottom 8T of the groove 8 measured along the reference normal line RN. The position, the width WG, and the depth DG of the groove 8 are determined as appropriate according to the specifications of the tire 2.

When the tire 2 presses on a road surface, the tread 4 becomes deformed. In a new tire 2, a groove 8 having a wide width and having a pair of wall surfaces 8S that do not come into contact with each other even when the tread 4 becomes deformed, is also referred to as main groove. A groove 8 having a narrow width and having a pair of wall surfaces 8S that come into contact with each other when the tread 4 becomes deformed, is also referred to as contact groove. Among the contact grooves, a contact groove having a width of 1.0 mm or less at a portion where the pair of wall surfaces 8S come into contact with each other, is referred to as sipe. Contact grooves other than sipes are referred to as narrow grooves. The narrow grooves each have a width of more than 1.0 mm at the portion where the pair of wall surfaces 8S come into contact with each other.

The tread 4 of the tire 2 has a plurality of circumferential grooves 12. The plurality of circumferential grooves 12 are aligned in the axial direction. Each circumferential groove 12 is continuous in the circumferential direction. Each circumferential groove 12 of the tire 2 extends straight in the circumferential direction. The circumferential groove 12 may be configured to extend in a zigzag manner in the circumferential direction.

As shown in FIG. 1, the tread 4 of the tire 2 has four circumferential grooves 12. Among the four circumferential grooves 12, the two circumferential grooves 12 located on the outermost sides in the axial direction are shoulder circumferential grooves 14. The shoulder circumferential groove 14 located on the first end TE1 side of the tread surface 6 (hereinafter referred to as first end TE1 side) is also referred to as first shoulder circumferential groove 14a, and the shoulder circumferential groove 14 located on the second end TE2 side of the tread surface 6 (hereinafter referred to as second end TE2 side) is also referred to as second shoulder circumferential groove 14b.

The circumferential groove 12 located between the two shoulder circumferential grooves 14 is a center circumferential groove 16. The tread 4 of the tire 2 has two center circumferential grooves 16. The number of center circumferential grooves 16 provided in the tread 4 may be one or may be three or more. The number of center circumferential grooves 16 provided in the tread 4 is determined as appropriate in consideration of the specifications of the tire 2. Normally, the number of center circumferential grooves 16 provided in the tread 4 is one or more and three or less.

The tread 4 of the tire 2 has one or more center circumferential grooves 16 aligned in the axial direction between the two shoulder circumferential grooves 14. In this specification, for convenience of description, in the case where a plurality of center circumferential grooves 16 are located between the two shoulder circumferential grooves 14, the plurality of center circumferential grooves 16 are referred to as, for example, first center circumferential groove 16a, second center circumferential groove 16b, and third center circumferential groove 16c (not shown), from the first end TE1 side toward the second end TE2 side.

As described above, the tread 4 shown in FIG. 1 has the two center circumferential grooves 16. The two center circumferential grooves 16 are also referred to as first center circumferential groove 16a and second center circumferential groove 16b, respectively, from the first end TE1 side toward the second end TE2 side.

Land portions 18 are formed by forming the circumferential grooves 12 on the tread 4. The tread 4 includes a plurality of land portions 18 separated by the circumferential grooves 12. As shown in FIG. 1, the tread 4 of the tire 2 includes five land portions 18.

Among the five land portions 18, the two land portions 18 located on the outermost sides in the axial direction are shoulder land portions 20. Each shoulder land portion 20 includes the end TE of the tread surface 6. The shoulder land portion 20 including the first end TE1 of the tread surface 6 is also referred to as first shoulder land portion 20a, and the shoulder land portion 20 including the second end TE2 is also referred to as second shoulder land portion 20b.

The land portion 18 located between the two shoulder land portions 20 is a center land portion 22. The tread 4 of the tire 2 includes three center land portions 22. The number of center land portions 22 provided in the tread 4 may be two or may be four or more. The number of center land portions 22 is determined by the number of center circumferential grooves 16 provided in the tread 4.

The tread 4 of the tire 2 includes a plurality of center land portions 22. In this specification, for convenience of description, the plurality of center land portions 22 provided in the tread 4 are referred to as, for example, first center land portion 22a, second center land portion 22b, and third center land portion 22c from the first end TE1 side toward the second end TE2 side.

As described above, the tread 4 includes the three center land portions 22. The three center land portions 22 are also referred to as, for example, first center land portion 22a, second center land portion 22b, and third center land portion 22c from the first end TE1 side, toward the second end TE2 side.

As shown in FIG. 1, the second center land portion 22b is located between the two center circumferential grooves 16. The first center land portion 22a is located between the center circumferential groove 16 and the shoulder circumferential groove 14. The third center land portion 22c is also located between the center circumferential groove 16 and the shoulder circumferential groove 14.

In the present invention, the center land portion 22 located between the two center circumferential grooves 16 is also referred to as main center land portion 24, and the center land portion 22 located between the center circumferential groove 16 and the shoulder circumferential groove 14 is also referred to as sub-center land portion 26.

In the tire 2, the second center land portion 22b is also referred to as main center land portion 24, and the first center land portion 22a and the third center land portion 22c are also referred to as sub-center land portions 26. The first center land portion 22a located on the first end TE1 side is also referred to as first sub-center land portion 26a, and the third center land portion 22c located on the second end TE2 side is also referred to as second sub-center land portion 26b.

In the tire 2, a portion of the tread 4 between the two shoulder circumferential grooves 14 is a center portion 28.

The center portion 28 has one or more center circumferential grooves 16. Accordingly, a plurality of center land portions 22 are formed in the center portion 28. That is, the center portion 28 includes a plurality of center land portions 22 separated by the one or more center circumferential grooves 16. In the tread 4 shown in FIG. 1, the center portion 28 includes three center land portions 22 separated by two center circumferential grooves 16. Among the three center land portions 22, the second center land portion 22b is located on the equator plane EL, the first center land portion 22a is located on the first end TE1 side of the second center land portion 22b, and the third center land portion 22c is located on the second end TE2 side of the second center land portion 22b.

A portion on each axially outer side of the center portion 28 is a side portion 30. Each side portion 30 includes the shoulder land portion 20 separated by the shoulder circumferential groove 14.

In the tire 2, each of the plurality of center land portions 22 provided in the center portion 28 includes a plurality of lateral grooves 32. In each center land portion 22, the plurality of lateral grooves 32 are aligned at predetermined intervals in the circumferential direction.

Each of the plurality of lateral grooves 32 traverses the center land portion 22. In other words, each lateral groove 32 extends between the two circumferential grooves 12 sandwiching the center land portion 22 therebetween. The lateral groove 32 is connected to the circumferential grooves 12 at ends E thereof. Each lateral groove 32 of the tire 2 is connected to the circumferential grooves 12 on both sides. The plurality of lateral grooves 32 provided in each center land portion 22 may include lateral grooves each connected to only the circumferential groove 12 on one side. In the tread 4 shown in FIG. 1, all of the lateral grooves 32 are connected to the circumferential grooves 12 on both sides.

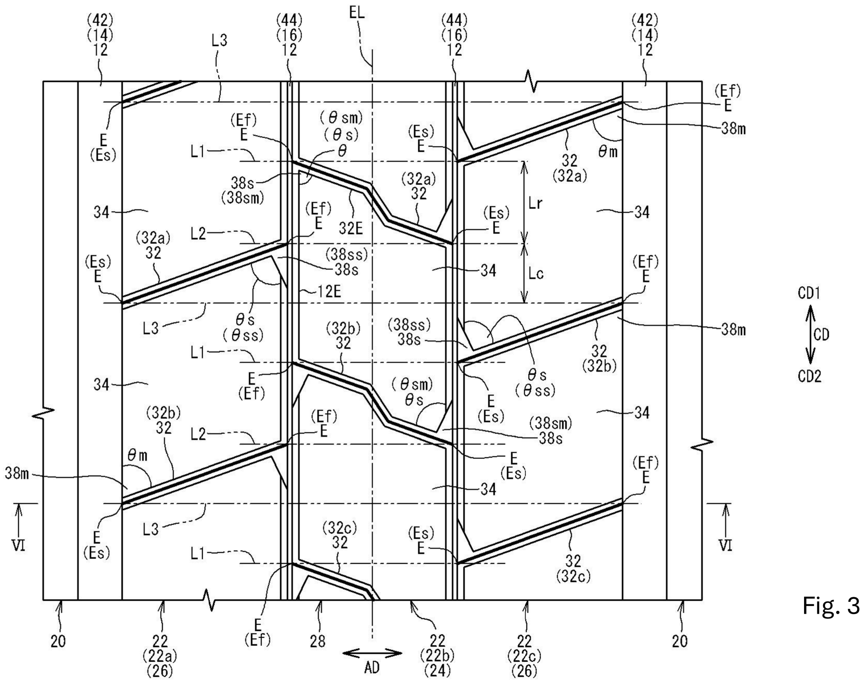

FIG. 3 shows a part of the center portion 28. The arrangement of the lateral grooves 32 in the center portion 28 will be described with reference to FIG. 3.

In the tire 2, the plurality of lateral grooves 32 provided in the center portion 28 are inclined with respect to the axial direction. Both ends E of each lateral groove 32 are spaced apart in the circumferential direction. For example, in the first center land portion 22a and the third center land portion 22c, the end E on the first end TE1 side of each lateral groove 32 is located on the second circumferential side, and the end E on the second end TE2 side thereof is located on the first circumferential side. In the second center land portion 22b, the end E on the first end TE1 side of each lateral groove 32 is located on the first circumferential side, and the end E on the second end TE2 side thereof is located on the second circumferential side.

In this specification, of both ends E of each lateral groove 32, the end E located on the first circumferential side is a first end Ef, and the end E located on the second circumferential side is a second end Es.

Each lateral groove 32 of the tire 2 has a first end Ef located on the first circumferential side and a second end Es located on the second circumferential side.

As described above, in each center land portion 22, the plurality of lateral grooves 32 are aligned in the circumferential direction. For convenience of description, the plurality of lateral grooves 32 provided in one center land portion 22 are referred to as, for example, first lateral groove 32a, second lateral groove 32b, and third lateral groove 32c, from the first circumferential side toward the second circumferential side. In this case, one lateral groove 32 may be selected as the first lateral groove 32a from among the plurality of lateral grooves 32 aligned in the circumferential direction, and the selection of the first lateral groove 32a is not particularly limited.

In FIG. 3, one lateral groove 32 is selected as a first lateral groove from among the plurality of lateral grooves 32 provided in one center land portion 22, and this lateral groove 32 is represented as the first lateral groove 32a. Furthermore, the lateral grooves 32 provided in the center land portion 22 are represented as, for example, the second lateral groove 32b and the third lateral groove 32c, in order from the lateral groove 32 located on the second circumferential side of the first lateral groove 32a.

In the present invention, a combination of two lateral grooves 32 adjacent to each other in the circumferential direction is also referred to as lateral groove pair. Of the two lateral grooves constituting the lateral groove pair, the lateral groove located on the first circumferential side is referred to as reference lateral groove, and the lateral groove located on the second circumferential side is referred to as corresponding lateral groove.

For example, in the center portion 28 shown in FIG. 3, the first lateral groove 32a of the second center land portion 22b is the lateral groove 32 that is located on the second circumferential side of the first lateral groove 32a of the third center land portion 22c and is adjacent to this first lateral groove 32a. That is, a combination of the first lateral groove 32a of the third center land portion 22c and the first lateral groove 32a of the second center land portion 22b constitutes a lateral groove pair including the first lateral groove 32a of the third center land portion 22c as a reference lateral groove and the first lateral groove 32a of the second center land portion 22b as a corresponding lateral groove.

The first lateral groove 32a of the first center land portion 22a is the lateral groove 32 that is located on the second circumferential side of the first lateral groove 32a of the second center land portion 22b and is adjacent to this first lateral groove 32a. That is, the first lateral groove 32a of the second center land portion 22b and the first lateral groove 32a of the first center land portion 22a constitute a lateral groove pair including the first lateral groove 32a of the second center land portion 22b as a reference lateral groove and the first lateral groove 32a of the first center land portion 22a as a corresponding lateral groove.

The second lateral groove 32b of the third center land portion 22c is the lateral groove 32 that is located on the second circumferential side of the first lateral groove 32a of the first center land portion 22a and is adjacent to this first lateral groove 32a. That is, the first lateral groove 32a of the first center land portion 22a and the second lateral groove 32b of the third center land portion 22c constitute a lateral groove pair including the first lateral groove 32a of the first center land portion 22a as a reference lateral groove and the second lateral groove 32b of the third center land portion 22c as a corresponding lateral groove.

In the center portion 28 shown in FIG. 3, a combination of a lateral groove 32 of the third center land portion 22c and the lateral groove 32 of the second center land portion 22b that is located on the second circumferential side of this lateral groove 32 of the third center land portion 22c and is adjacent to this lateral groove 32 of the third center land portion 22c constitutes a lateral groove pair including the lateral groove 32 of the third center land portion 22c as a reference lateral groove and the lateral groove 32 of the second center land portion 22b as a corresponding lateral groove.

A lateral groove 32 of the second center land portion 22b and the lateral groove 32 of the first center land portion 22a that is located on the second circumferential side of this lateral groove 32 of the second center land portion 22b and is adjacent to this lateral groove 32 of the second center land portion 22b constitute a lateral groove pair including the lateral groove 32 of the second center land portion 22b as a reference lateral groove and the lateral groove 32 of the first center land portion 22a as a corresponding lateral groove.

A lateral groove 32 of the first center land portion 22a and the lateral groove 32 of the third center land portion 22c that is located on the second circumferential side of this lateral groove 32 of the first center land portion 22a and is adjacent to this lateral groove 32 of the first center land portion 22a constitute a lateral groove pair including the lateral groove 32 of the first center land portion 22a as a reference lateral groove and the lateral groove 32 of the third center land portion 22c as a corresponding lateral groove.

In the center portion 28, the plurality of lateral grooves 32 are arranged such that a lateral groove 32 of one center land portion 22 as a reference lateral groove and the lateral groove 32 of another center land portion 22, as a corresponding lateral groove, that is located on the second circumferential side of this lateral groove 32 of the one center land portion 22 and is adjacent to this lateral groove 32 of the one center land portion 22 constitute one lateral groove pair.

In each center land portion 22 included in the center portion 28, the first lateral groove 32a and the second lateral groove 32b that is located on the second circumferential side of this first lateral groove 32a and is adjacent to this first lateral groove 32a constitute a lateral groove pair including the first lateral groove 32a as a reference lateral groove and the second lateral groove 32b as a corresponding lateral groove. The second lateral groove 32b and the third lateral groove 32c that is located on the second circumferential side of this second lateral groove 32b and is adjacent to this second lateral groove 32b constitute a lateral groove pair including the second lateral groove 32b as a reference lateral groove and the third lateral groove 32c as a corresponding lateral groove.

In the center land portion 22 that forms a part of the center portion 28 as well, the plurality of lateral grooves 32 are arranged such that one lateral groove 32 as a reference lateral groove and another lateral groove 32 as a corresponding lateral groove that is located on the second circumferential side of this one lateral groove 32 and is adjacent to this one lateral groove 32 constitute one lateral groove pair.

As described above, in the center portion 28 of the tire 2, the plurality of lateral grooves 32 are arranged such that a reference lateral groove located on the first circumferential side and a corresponding lateral groove located on the second circumferential side constitute one lateral groove pair.

In FIG. 3, each alternate long and two short dashes line L1 is a straight line extending in the axial direction and passes through the second end Es of the lateral groove 32 of the third center land portion 22c that is the reference lateral groove of a lateral groove pair and the first end Ef of the lateral groove 32 of the second center land portion 22b that is the corresponding lateral groove of the same lateral groove pair. The position in the circumferential direction of the second end Es of the lateral groove 32 of the third center land portion 22c as the reference lateral groove coincides with the position in the circumferential direction of the first end Ef of the lateral groove 32 of the second center land portion 22b as the corresponding lateral groove.

Each alternate long and two short dashes line L2 is a straight line extending in the axial direction and passes through the second end Es of the lateral groove 32 of the second center land portion 22b that is the reference lateral groove of a lateral groove pair and the first end Ef of the lateral groove 32 of the first center land portion 22a that is the corresponding lateral groove of the same lateral groove pair. The position in the circumferential direction of the second end Es of the lateral groove 32 of the second center land portion 22b as the reference lateral groove coincides with the position in the circumferential direction of the first end Ef of the lateral groove 32 of the first center land portion 22a as the corresponding lateral groove.

Each alternate long and two short dashes line L3 is a straight line extending in the axial direction and passes through the second end Es of the lateral groove 32 of the first center land portion 22a that is the reference lateral groove of a lateral groove pair and the first end Ef of the lateral groove 32 of the third center land portion 22c that is the corresponding lateral groove of the same lateral groove pair. The position in the circumferential direction of the second end Es of the lateral groove 32 of the first center land portion 22a as the reference lateral groove coincides with the position in the circumferential direction of the first end Ef of the lateral groove 32 of the third center land portion 22c as the corresponding lateral groove.

In the center portion 28, a reference lateral groove and a corresponding lateral groove that constitute a lateral groove pair are provided in the center land portions 22 different from each other, and a reference lateral groove provided in one center land portion 22 and a corresponding lateral groove provided in another center land portion 22 are arranged such that the second end Es of the reference lateral groove and the first end Ef of the corresponding lateral groove are at the same position in the circumferential direction.

Although not shown, for example, in the third center land portion 22c, the first lateral groove 32a and the second lateral groove 32b constituting a lateral groove pair may be arranged such that the second end Es of the first lateral groove 32a and the first end Ef of the second lateral groove 32b are at the same position in the circumferential direction. The second lateral groove 32b and the third lateral groove 32c constituting a lateral groove pair may be arranged such that the second end Es of the second lateral groove 32b and the first end Ef of the third lateral groove 32c are at the same position in the circumferential direction. That is, in one center land portion 22 included in the center portion 28, the reference lateral groove and the corresponding lateral groove of each lateral groove pair may be arranged such that the second end Es of the reference lateral groove and the first end Ef of the corresponding lateral groove are at the same position in the circumferential direction. In all of the center land portions 22 constituting the center portion 28, the reference lateral groove and the corresponding lateral groove of each lateral groove pair may be arranged such that the second end Es of the reference lateral groove and the first end Ef of the corresponding lateral groove are at the same position in the circumferential direction.

As described above, in the center portion 28 of the tire 2, a reference lateral groove and a corresponding lateral groove that constitute a lateral groove pair are arranged such that the second end Es of the reference lateral groove and the first end Ef of the corresponding lateral groove are at the same position in the circumferential direction.

Whether or not the second end Es of the reference lateral groove and the first end Ef of the corresponding lateral groove are at the same position in the circumferential direction is determined using the groove width center lines of the reference lateral groove and the corresponding lateral groove. The first end Ef and the second end Es of the reference lateral groove and the first end Ef and the second end Es of the corresponding lateral groove are specified as the ends of the groove width center lines of the respective lateral grooves. Considering the characteristics of a tire, which is a vulcanized rubber product, the above-described "same position" includes a mode in which the second end Es of the reference lateral groove and the first end Ef of the corresponding lateral groove are displaced from each other by a slight distance in the circumferential direction of the tire, to the extent that manufacturing tolerances are allowed. In this case, the interval between the second end Es of the reference lateral groove and the first end Ef of the corresponding lateral groove, which is defined as the distance in the circumferential direction from the second end Es of the reference lateral groove to the first end Ef of the corresponding lateral groove, is 5% or less, preferably 3% or less, and more preferably 1% or less of the sum (Lr + Lc) of a length Lr in the circumferential direction of the groove width center line of the reference lateral groove and a length Lc in the circumferential direction of the groove width center line of the corresponding lateral groove. Most preferably, the interval between the second end Es of the reference lateral groove and the first end Ef of the corresponding lateral groove is 0.0 mm or less.

As described above, the tread 4 of the tire 2 includes the two shoulder circumferential grooves 14 and the two center circumferential grooves 16 located between the two shoulder circumferential grooves 14.

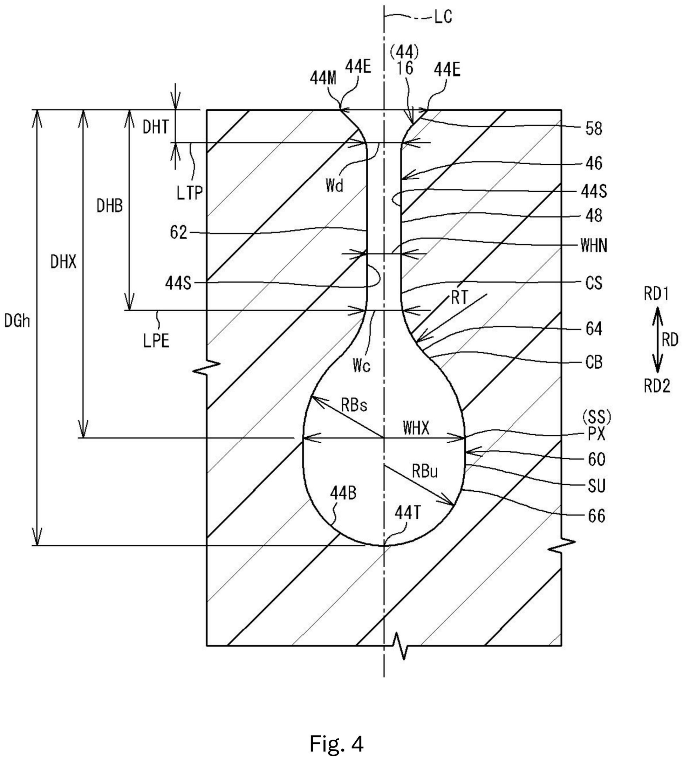

FIG. 2 shows a cross-section of the shoulder circumferential groove 14. FIG. 4 shows a cross-section of the center circumferential groove 16. The shoulder circumferential groove 14 is a circumferential main groove 42. The center circumferential groove 16 is a circumferential narrow groove 44. The circumferential grooves 12 provided on the tread 4 of the tire 2 include two types of circumferential grooves 12 having different shapes, that is, the circumferential main groove 42 and the circumferential narrow groove 44.

The circumferential main groove 42 has a pair of wall surfaces 42S including a groove opening 42M, and a bottom surface 42B including a groove bottom 42T. The circumferential main groove 42 is the above-described main groove. The pair of wall surfaces 42S of the circumferential main groove 42 do not come into contact with each other even when the tread 4 comes into contact with a road surface and becomes deformed. The circumferential main groove 42 has a shape that is common as the shape of a groove provided in the tread of a heavy duty tire.

A width WGm at the groove opening 42M of the circumferential main groove 42 is preferably 2% or more and 10% or less of the width TW of the tread surface 6 from the viewpoint of contribution to drainage performance and traction performance. A depth DGm of the circumferential main groove 42 is, for example, 10 mm or more and 21 mm or less. From the viewpoint that the tire 2 can exhibit good wet performance, the depth DGm is preferably 13 mm or more and 18 mm or less.

The circumferential narrow groove 44 has a pair of wall surfaces 44S including a groove opening 44M, and a bottom surface 44B including a groove bottom 44T. An alternate long and short dash line LC is the groove width center line of the circumferential narrow groove 44. The circumferential narrow groove 44 of the tire 2 has a cross-sectional shape that is symmetrical with respect to the groove width center line LC. The groove width center line LC extends in the depth direction of the circumferential narrow groove 44 and passes through the groove bottom 44T. The circumferential narrow groove 44 may have a cross-sectional shape that is asymmetric with respect to the groove width center line LC. In FIG. 4, a length indicated by a double-headed arrow DGh is the depth of the circumferential narrow groove 44.

The depth DGh of the circumferential narrow groove 44 of the tire 2 is the same as the depth DGm of the circumferential main groove 42, or the circumferential narrow groove 44 is shallower than the circumferential main groove 42. Specifically, the ratio DGh/DGm of the depth DGh of the circumferential narrow groove 44 to the groove depth DGm of the circumferential main groove 42 is 0.75 or more and 1.00 or less.

The circumferential narrow groove 44 includes a body portion 46. The body portion 46 includes the groove opening 44M of the circumferential narrow groove 44. In FIG. 4, a length indicated by a double-headed arrow WHN is the minimum width of the circumferential narrow groove 44. The circumferential narrow groove 44 has the minimum width WHN at the body portion 46.

The body portion 46 includes a narrow groove portion 48. The circumferential narrow groove 44 has the minimum width WHN at the narrow groove portion 48. The minimum width WHN is set such that the pair of wall surfaces 44S of the circumferential narrow groove 44 come into contact with each other at the narrow groove portion 48 when the tread 4 comes into contact with a road surface and becomes deformed. The minimum width WHN of the circumferential narrow groove 44 is also the minimum width of the narrow groove portion 48.

As described above, the center portion 28 of the tread 4 has one or more center circumferential grooves 16. In the tire 2, at least one of the one or more center circumferential grooves 16 is a circumferential narrow groove 44. As shown in FIG. 3, the center circumferential grooves 16 of the center portion 28 may all be circumferential narrow grooves 44.

As described above, in each center land portion 22, the plurality of lateral grooves 32 are aligned at predetermined intervals in the circumferential direction. Accordingly, in each center land portion 22, a plurality of blocks 34 aligned in the circumferential direction are formed. The center land portion 22 includes the plurality of blocks 34 separated by the plurality of lateral grooves 32. A top surface 35 of each block 34 forms a part of the land surface 10.

Each block 34 includes four corner portions 36. Each corner portion 36 is located at a portion where the lateral groove 32 joins the circumferential groove 12. The corner portion 36 is formed by the lateral groove 32 joining the circumferential groove 12. When the lateral groove 32 obliquely joins the circumferential groove 12, a corner portion 36 that is acute (hereinafter referred to as acute corner portion 38) is formed in the block 34 located on one side of the lateral groove 32, and a corner portion 36 that is obtuse (hereinafter referred to as obtuse angle portion 40) is formed in the block 34 located on the other side of the lateral groove 32. In other words, the lateral groove 32 intersects the circumferential groove 12 at an acute angle, thereby forming the acute corner portion 38, and the lateral groove 32 intersects the circumferential groove 12 at an obtuse angle, thereby forming the obtuse angle portion 40. Each block 34 of the tire 2 includes two acute corner portions 38 and two obtuse angle portions 40.

The tread 4 of the tire 2 includes the circumferential main grooves 42 and the circumferential narrow grooves 44 as the circumferential grooves 12. Among the acute corner portions 38 formed by the lateral grooves 32 joining the circumferential grooves 12, the acute corner portions 38 formed by the lateral grooves 32 joining the circumferential main grooves 42 are also referred to as main groove acute corner portions 38m. The acute corner portions 38 formed by the lateral grooves 32 joining the circumferential narrow grooves 44 are also referred to as narrow groove acute corner portions 38s. Each of the blocks 34 formed in each sub-center land portion 26 includes a main groove acute corner portion 38m on the end TE side of the tread surface 6 and a narrow groove acute corner portion 38s on the equator plane EL side, as the acute corner portions 38. The two acute corner portions 38 of each block 34 formed in the main center land portion 24 are both narrow groove acute corner portions 38s.

In the tire 2, in the center portion 28 of the tread 4, the plurality of lateral grooves 32 are arranged such that a reference lateral groove located on the first circumferential side and a corresponding lateral groove located on the second circumferential side constitute one lateral groove pair. In the lateral groove pair, the second end Es of the reference lateral groove and the first end Ef of the corresponding lateral groove are at the same position in the circumferential direction. In other words, the plurality of lateral grooves 32 are arranged seamlessly in the center portion 28 of the tread 4. Accordingly, by the plurality of lateral grooves 32 arranged intermittently in the circumferential direction, a groove that appears to extend continuously in the circumferential direction is formed. The tire 2 can improve quietness while maintaining good wet performance.

As described above, the center land portion 22 includes blocks 34 separated by lateral grooves 32. Since the lateral grooves 32 are arranged seamlessly, chipping may occur at each corner portion 36 (particularly each acute corner portion 38) of each block 34 which is located at the portion where the lateral groove 32 joins the circumferential groove 12.

As described above, at least one of the one or more center circumferential grooves 16 provided in the center portion 28 of the tread 4 is a circumferential narrow groove 44. When the tread 4 comes into contact with a road surface and becomes deformed, the pair of wall surfaces 44S of the circumferential narrow groove 44 come into contact with each other at the narrow groove portion 48. Accordingly, the center land portions 22 located on both sides of the circumferential narrow groove 44 support each other. The apparent stiffness of the blocks 34 constituting the center land portions 22 is increased. Deformation of the corner portions 36 of the blocks 34 is suppressed. Accordingly, occurrence of chipping at each corner portion 36 (particularly each acute corner portion 38) of each block 34 is suppressed. The tire 2 can reduce the risk of occurrence of block chipping.

The tire 2 can achieve improvement of block chipping resistance while achieving both wet performance and quietness.

As described above, in the center portion 28, a reference lateral groove and a corresponding lateral groove that constitute a lateral groove pair are provided in the center land portions 22 different from each other, and a reference lateral groove provided in one center land portion 22 and a corresponding lateral groove provided in another center land portion 22 are arranged such that the second end Es of the reference lateral groove and the first end Ef of the corresponding lateral groove are at the same position in the circumferential direction. Accordingly, the inclination angle of each lateral groove 32 with respect to the axial direction can be set to a gentle angle while maintaining the seamless arrangement of the lateral grooves 32. In the tire 2, the lateral stiffness of the blocks 34 separated by the lateral grooves 32 can be increased while maintaining good quietness. The tire 2 can achieve improvement of wear resistance and steering stability. Since the risk of occurrence of block chipping can also be reduced, the tire 2 can also achieve improvement of block chipping resistance. From this viewpoint, it is preferable that, when: each of the plurality of lateral grooves 32 has a first end Ef located on the first circumferential side and a second end Es located on the second circumferential side; in the center portion 28, the plurality of lateral grooves 32 are arranged such that a reference lateral groove located on the first circumferential side and a corresponding lateral groove located on the second circumferential side constitute one lateral groove pair; and, in a lateral groove pair, the second end Es of the reference lateral groove and the first end Ef of the corresponding lateral groove are at the same position in the circumferential direction, the reference lateral groove and the corresponding lateral groove that constitute the lateral groove pair are provided in the center land portions 22 different from each other.

As described above, in each center land portion 22, the lateral grooves 32 are inclined with respect to the axial direction. That is, the lateral grooves 32 are inclined with respect to the circumferential direction.

In FIG. 3, each angle θ represents the angle of the lateral groove 32 with respect to the circumferential direction. As described above, the lateral grooves 32 obliquely join the circumferential grooves 12. The inclination angle θ of each lateral groove 32 with respect to the circumferential direction is represented as an angle between an edge 12E of the circumferential groove 12 and an edge 32E of the lateral groove 32 at the portion where the lateral groove 32 joins the circumferential groove 12, specifically, at the portion where the acute corner portion 38 of the block 34 is formed. In the case where the circumferential groove 12 is inclined with respect to the circumferential direction at the portion where the lateral groove 32 joins the circumferential groove 12, the inclination angle θ is obtained on the assumption that the circumferential groove 12 extends straight in the circumferential direction at this portion.

The inclination angle θ of each lateral groove 32 with respect to the circumferential direction is preferably 55 degrees or more and 85 degrees or less.

When the inclination angle θ is set to 55 degrees or more, the stiffness of the acute corner portions 38 of the blocks 34 is increased. Occurrence of block chipping at the acute corner portions 38 is suppressed. The tire 2 can improve block chipping resistance. From this viewpoint, the inclination angle θ is more preferably 65 degrees or more.

When the inclination angle θ is set to 85 degrees or less, generation of noise caused by the lateral grooves 32 is suppressed. The tire 2 can improve quietness. From this viewpoint, the inclination angle θ is preferably 80 degrees or less.

As described above, the tread 4 of the tire 2 includes the circumferential main grooves 42 and the circumferential narrow grooves 44 as the circumferential grooves 12. The acute corner portions 38 of the blocks 34 include the main groove acute corner portions 38m formed by the lateral grooves 32 joining the circumferential main grooves 42, and the narrow groove acute corner portions 38s formed by the lateral grooves 32 joining the circumferential narrow grooves 44. The narrow groove acute corner portions 38s include sub-narrow groove acute corner portions 38ss formed in the blocks 34 of the sub-center land portions 26 each located between the circumferential main groove 42 and the circumferential narrow groove 44, and main narrow groove acute corner portions 38sm formed in the blocks 34 of the main center land portion 24 located between the two circumferential narrow grooves 44. As shown in FIG. 3, each circumferential narrow groove 44 is located axially inward of the circumferential main groove 42. The circumferential narrow groove 44 is included in the center portion 28 which exerts a high ground-contact pressure when the tread 4 comes into contact with a road surface. There is a concern that chipping is more likely to occur in the narrow groove acute corner portions 38s of the blocks 34 than in the main groove acute corner portions 38m of the blocks 34.

However, in the tire 2, an inclination angle θs of the lateral groove 32 with respect to the circumferential direction at each portion where the narrow groove acute corner portion 38s is formed is set to be equal to an inclination angle θm of the lateral groove 32 with respect to the circumferential direction at each portion where the main groove acute corner portion 38m is formed, or to be larger than the inclination angle θm. Accordingly, the tire 2 can achieve further improvement of block chipping resistance while maintaining good quietness. In this case, from the viewpoint of improving block chipping resistance, an inclination angle θsm of the lateral groove 32 with respect to the circumferential direction at each portion where the main narrow groove acute corner portion 38sm is formed is preferably set to be larger than an inclination angle θss of the lateral groove 32 with respect to the circumferential direction at each portion where the sub-narrow groove acute corner portion 38ss is formed. Specifically, the difference (θsm - θss) between the inclination angle θsm and the inclination angle θss is preferably 3.5 degrees or more and more preferably 4.5 degrees or more. From the viewpoint that the tire 2 can achieve a good balance between quietness and block chipping resistance, the difference (θsm - θss) is preferably 6.0 degrees or less and more preferably 5.0 degrees or less. From the viewpoint of achieving both quietness and block chipping resistance, in the case where the inclination angle θsm of the lateral groove 32 with respect to the circumferential direction at each portion where the main narrow groove acute corner portion 38sm is formed is set to be larger than the inclination angle θss of the lateral groove 32 with respect to the circumferential direction at each portion where the sub-narrow groove acute corner portion 38ss is formed, the inclination angle θss is preferably set to be equal to the inclination angle θm of the lateral groove 32 with respect to the circumferential direction at each portion where the main groove acute corner portion 38m is formed. A relationship in which inclination angles are equal to each other means that the difference between the inclination angles is 3.0 degrees or less.

As described above, the tread pattern is formed by forming the grooves 8 on the tread 4. The tread pattern of the tire 2 includes the plurality of circumferential grooves 12 and the plurality of lateral grooves 32 as the grooves 8. The tread 4 has the tread pattern formed by forming the grooves 8 including the plurality of circumferential grooves 12 and the plurality of lateral grooves 32, on the tread 4.

As shown in FIG. 1, the tread pattern is divided into a plurality of pitch patterns 50 aligned in the circumferential direction. In other words, the tread pattern includes a plurality of pitch patterns 50 aligned in the circumferential direction. In FIG. 1, each solid line PP extending in the axial direction is the boundary between two adjacent pitch patterns 50.

The tread pattern is formed by combining the plurality of pitch patterns 50. In the present invention, the pitch pattern 50 means a unit pattern that is repeated in the circumferential direction.

As described above, the tread 4 includes the plurality of center land portions 22. Each of the plurality of pitch patterns 50 constituting the tread pattern includes a plurality of center land portions 22. The tread 4 of the tire 2 has the first center land portion 22a, the second center land portion 22b, and the third center land portion 22c. As shown in FIG. 1, the first center land portion 22a, the second center land portion 22b, and the third center land portion 22c are included in one pitch pattern 50. The first center land portion 22a included in the pitch pattern 50 includes one lateral groove 32. The second center land portion 22b included in this pitch pattern 50 also includes one lateral groove 32. The third center land portion 22c included in this pitch pattern 50 also includes one lateral groove 32. In the tire 2, each of the plurality of center land portions 22 included in one pitch pattern 50 includes one lateral groove 32. Accordingly, in the tire 2, the lateral grooves 32 can be effectively arranged in the center land portions 22. The tire 2 can achieve both wet performance and block chipping resistance while maintaining good quietness. From this viewpoint, it is preferable that one lateral groove 32 is provided in each of the plurality of center land portions 22 included in each pitch pattern 50 constituting the tread pattern.

As shown in FIG. 1, between the first center land portion 22a and the second center land portion 22b, which are adjacent to each other in the axial direction, the lateral grooves 32 provided in the first center land portion 22a and the lateral grooves 32 provided in the second center land portion 22b are arranged alternately in the circumferential direction. Also, between the second center land portion 22b and the third center land portion 22c, which are adjacent to each other in the axial direction, the lateral grooves 32 provided in the second center land portion 22b and the lateral grooves 32 provided in the third center land portion 22c are arranged alternately in the circumferential direction. In the tire 2, the lateral grooves 32 provided in one of two adjacent center land portions 22 and the lateral grooves 32 provided in the other of the two adjacent center land portions 22 are arranged alternately in the circumferential direction. Accordingly, in the tire 2, the lateral grooves 32 can be arranged at a fixed distance in one center land portion 22. In the tire 2, the stiffness of the blocks 34 separated by the lateral grooves 32 can be increased. The tire 2 can improve block chipping resistance. From this viewpoint, it is preferable that the lateral grooves 32 provided in one of two adjacent center land portions 22 and the lateral grooves 32 provided in the other of the two adjacent center land portions 22 are arranged alternately in the circumferential direction.

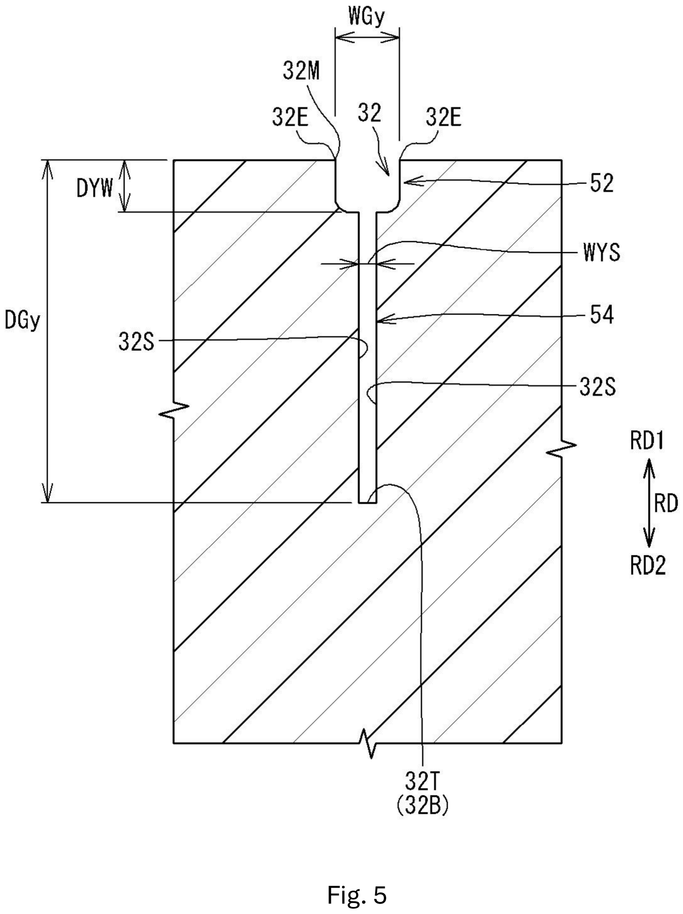

FIG. 5 shows a cross-section of the lateral groove 32. FIG. 5 shows a cross-section of the lateral groove 32 of the second center land portion 22b. Although not shown, the lateral grooves 32 of the first center land portion 22a and the third center land portion 22c have the same cross-sectional shape as the lateral grooves 32 of the second center land portion 22b.

The lateral groove 32 has a pair of wall surfaces 32S including a groove opening 32M, and a bottom surface 32B including a groove bottom 32T. Each lateral groove 32 of the tire 2 includes a wide portion 52 and a sipe portion 54. The wide portion 52 includes the groove opening 32M of the lateral groove 32. The wide portion 52 of the tire 2 has a quadrangular cross-section. The wide portion 52 may be configured with a cross-sectional shape tapered from the groove opening 32M toward the sipe portion 54. In FIG. 5, a length indicated by a double-headed arrow WGy is the width of the wide portion 52 at the groove opening 32M. The wide portion 52 has a width WGy of more than 1.0 mm. From the viewpoint of wet performance, the width WGy of the wide portion 52 is preferably 1.5 mm or more and 5.0 mm or less.

The sipe portion 54 is located radially inward of the wide portion 52. The sipe portion 54 includes the groove bottom 32T of the lateral groove 32. The sipe portion 54 extends straight in the depth direction of the lateral groove 32. In FIG. 5, a length indicated by a double-headed arrow WYS is the width of the sipe portion 54. The sipe portion 54 has a width WYS of 1.0 mm or less. When the tread 4 comes into contact with a road surface and becomes deformed, the pair of wall surfaces 32S of the lateral groove 32 come into contact with each other at the sipe portion 54. The lateral groove 32 has a width of 1.0 mm or less at a portion where the pair of wall surfaces 32S come into contact with each other. The lateral groove 32 is a sipe. The lateral groove 32 may be composed only of the sipe portion 54 without providing the wide portion 52 in the lateral groove 32. In the tire 2, the blocks 34 formed on both sides of each lateral groove 32 support each other. The apparent stiffness of the blocks 34 is increased. Deformation of the corner portions 36 of the blocks 34 (particularly the acute corner portions 38) is suppressed. The tire 2 can improve block chipping resistance.

In the tire 2, each lateral groove 32 does not have to be a sipe. The lateral groove 32 may be configured as a narrow groove having a narrow width and having a width of more than 1.0 mm at the portion where the pair of wall surfaces 32S come into contact with each other or may be configured as a main groove having a wide width and having a pair of wall surfaces 32S that do not come into contact with each other even when the tread 4 becomes deformed. From the viewpoint of improving block chipping resistance, each lateral groove 32 is preferably a sipe. In the case where each lateral groove 32 is a sipe, from the viewpoint of achieving both wet performance and block chipping resistance, it is preferable that, as shown in FIG. 5, the lateral groove 32 includes the wide portion 52 and the sipe portion 54 located radially inward of the wide portion 52, the wide portion 52 includes the groove opening 32M of the lateral groove 32 and has a width of more than 1.0 mm, and the sipe portion 54 includes the groove bottom 32T of the lateral groove 32 and has a width of 1.0 mm or less. In this case, although not shown, the sipe portion 54 may be configured to extend in a zigzag manner in the depth direction.

In FIG. 5, a length indicated by a double-headed arrow DGy is the depth of the lateral groove 32. A length indicated by a double-headed arrow DYW is the depth of the wide portion 52.

From the viewpoint that the lateral groove 32 can sufficiently exhibit its function, the ratio DYW/DGy of the depth DYW of the wide portion 52 to the depth DGy of the lateral groove 32 is preferably 0.10 or more and 0.25 or less and more preferably 0.15 or more and 0.20 or less.

As shown in FIG. 1, the acute corner portions 38 of the blocks 34 have inclined surfaces 56. Each inclined surface 56 is a surface that is connected to the top surface 35 of the block 34 and is inclined with respect to the top surface 35. When the inclined surface 56 is provided to the acute corner portion 38, the apparent stiffness of the acute corner portion 38 is increased. Accordingly, deformation of the acute corner portion 38 is suppressed. The tire 2 can improve block chipping resistance. From this viewpoint, it is preferable that the acute corner portion 38 has the inclined surface 56 that is connected to the top surface 35 of the block 34 and is inclined with respect to the top surface 35. In this case, the angle of the inclined surface 56 with respect to the top surface 35, that is, the inclination angle of the inclined surface 56, is preferably 40 degrees or more and 70 degrees or less.

As described above, the body portion 46 of the circumferential narrow groove 44 includes the narrow groove portion 48. In the circumferential narrow groove 44, as shown in FIG. 4, a portion at the groove opening 44M of the circumferential narrow groove 44 may be processed in a tapered manner. In this case, the body portion 46 further includes a tapered portion 58. The tapered portion 58 includes the groove opening 44M of the circumferential narrow groove 44. The narrow groove portion 48 is located radially inward of the tapered portion 58. The tapered portion 58 is tapered from the groove opening 44M toward the narrow groove portion 48.

In FIG. 4, a straight line LTP represents the position of the boundary between the tapered portion 58 and the narrow groove portion 48. The boundary LTP between the tapered portion 58 and the narrow groove portion 48 is represented by a position where, at the boundary portion between the tapered portion 58 and the narrow groove portion 48, the circumferential narrow groove 44 has a width Wd that is 1.1 times the minimum width WHN of the narrow groove portion 48. In FIG. 4, a length indicated by a double-headed arrow DHT is the depth of the tapered portion 58.

The tapered portion 58 can contribute to suppressing an increase in the ground-contact pressure at the groove opening 44M of the circumferential narrow groove 44. The tire 2 can improve block chipping resistance. The tapered portion 58 can also contribute to increasing the groove volume of the circumferential narrow groove 44. The tire 2 can also improve wet performance. From this viewpoint, it is preferable that the body portion 46 includes the tapered portion 58 including the groove opening 44M, and the narrow groove portion 48 located radially inward of the tapered portion 58, and the tapered portion 58 is tapered from the groove opening 44M toward the narrow groove portion 48. In this case, from the viewpoint of achieving both wet performance and block chipping resistance, the ratio DHT/DGh of the depth DHT of the tapered portion 58 to the depth DGh of the circumferential narrow groove 44 is preferably 0.10 or more and 0.15 or less.

The circumferential narrow groove 44 of the tire 2 can be further provided with a widened portion on the radially inner side of the body portion 46. The circumferential narrow groove 44 can include the body portion 46 and a widened portion 60 located radially inward of the body portion 46. In this case, the widened portion 60 includes the groove bottom 44T of the circumferential narrow groove 44. The width of the widened portion 60 is wider than the width of the narrow groove portion 48 of the body portion 46.

In FIG. 4, a position indicated by a solid line LPE is the boundary between the body portion 46 (specifically, the narrow groove portion 48) and the widened portion 60. The boundary LPE is represented by a position where the circumferential narrow groove 44 has a width Wc that is 1.1 times the minimum width WHN of the narrow groove portion 48. In the case where a portion having a width Wc that is 1.1 times the minimum width WHN has a certain length in the depth direction, the radially outer end of this portion is specified as the position of the boundary LPE. In FIG. 4, a length indicated by a double-headed arrow DHB is the depth of the body portion 46.

In the tire 2, a portion between the above-described boundary LTP between the tapered portion 58 and the narrow groove portion 48 and the above-described boundary LPE between the narrow groove portion 48 and the widened portion 60 is the narrow groove portion 48. The narrow groove portion 48 includes a straight portion 62 that extends straight in the depth direction. The straight portion 62 has a width WHN that is uniform in the depth direction. In the cross-section of the circumferential narrow groove 44 shown in FIG. 4, the contour of the straight portion 62 is represented by a straight line. Although not shown, the narrow groove portion 48 may be configured such that, for example, the width thereof gradually increases from the position where the narrow groove portion 48 has the minimum width WHN, toward each of the groove opening 44M and the widened portion 60.

In FIG. 4, a length indicated by a double-headed arrow WHX is the maximum width of the circumferential narrow groove 44. A position indicated by reference character PX is a position where the circumferential narrow groove 44 has the maximum width WHX (hereinafter referred to as maximum width position of the circumferential narrow groove 44). In the case where a portion having the maximum width WHX has a certain length in the depth direction, the radially outer end of this portion is specified as the maximum width position PX.

As shown in FIG. 4, the widened portion 60 includes the maximum width position PX. The circumferential narrow groove 44 has the maximum width WHX at the widened portion 60. The maximum width WHX of the circumferential narrow groove 44 is also the maximum width of the widened portion 60. The widened portion 60 is tapered radially outward from the portion having the maximum width WHX. The widened portion 60 is tapered radially inward from the portion having the maximum width WHX. In FIG. 4, a length indicated by a double-headed arrow DHX is the depth from the groove opening 44M of the circumferential narrow groove 44 to the position where the widened portion 60 has the maximum width WHX.

The widened portion 60 includes an inflection portion 64 and a bottom portion 66. The widened portion 60 has the maximum width WHX at the bottom portion 66. In FIG. 4, a position indicated by reference character CB is the boundary between the inflection portion 64 and the bottom portion 66.

The inflection portion 64 connects the narrow groove portion 48 and the bottom portion 66. The width of the inflection portion 64 gradually increases from the boundary LPE with the narrow groove portion 48 toward the boundary CB with the bottom portion 66. The inflection portion 64 is curved so as to be recessed inward from the outer side thereof. Specifically, in the cross-section of the circumferential narrow groove 44, the contour of the inflection portion 64 is represented by an arc. In FIG. 4, an arrow RT indicates the radius of the arc representing the contour of the inflection portion 64. The arc representing the contour of the inflection portion 64 is tangent to the straight line representing the contour of the straight portion 62 of the narrow groove portion 48, at a boundary CS between the inflection portion 64 and the straight portion 62.

The bottom portion 66 is located radially inward of the inflection portion 64.

The bottom portion 66 includes the groove bottom 44T of the circumferential narrow groove 44. The bottom portion 66 is curved so as to bulge outward from the inner side thereof. The bottom portion 66 in the tire 2 includes a straight portion 68 having a width WHX that is uniform in the depth direction, an outer portion 70 located radially outward of the straight portion 68, and an inner portion 72 located radially inward of the straight portion 68.

In the cross-section of the circumferential narrow groove 44, the contour of the straight portion 68 is represented by a straight line.

The contour of the outer portion 70 is represented by an arc. In FIG. 4, an arrow RBs indicates the radius of the arc representing the contour of the outer portion 70. The arc representing the contour of the outer portion 70 is tangent to the arc representing the contour of the inflection portion 64, at the boundary CB. The arc representing the contour of the outer portion 70 is tangent to the straight line representing the contour of the straight portion 68, at a boundary SS between the outer portion 70 and the straight portion 68.

The contour of the inner portion 72 is represented by an arc. In FIG. 4, an arrow RBu indicates the radius of the arc representing the contour of the inner portion 72. The arc representing the contour of the inner portion 72 is tangent to the straight line representing the contour of the straight portion 68 at a boundary SU between the straight portion 68 and the inner portion 72.

In the tire 2, the radius RBu of the arc representing the contour of the inner portion 72 is the same as the radius RBs of the arc representing the contour of the outer portion 70.

In the tire 2, the straight portion 68 may not necessarily be provided in the bottom portion 66. In this case, the bottom portion 66 is composed of the outer portion 70 and the inner portion 72.

The circumferential narrow groove 44 has the minimum width WHN at the narrow groove portion 48 and has the maximum width WHX at the widened portion 60. The widened portion 60 is located radially inward of the body portion 46 (specifically, the narrow groove portion 48). After the narrow groove portion 48 disappears due to wear, the widened portion 60 becomes exposed. The widened portion 60 that becomes exposed after the narrow groove portion 48 disappears can contribute to suppressing a decrease in drainage performance caused by employing the circumferential narrow groove 44 as the circumferential groove 12. The tire 2 can maintain good wet performance. From this viewpoint, it is preferable that the circumferential narrow groove 44 includes the widened portion 60 located radially inward of the body portion 46, and the circumferential narrow groove 44 has the minimum width WHN at the narrow groove portion 48 and has the maximum width WHX at the widened portion 60.

In the tire 2, the radius RT of the arc representing the contour of the inflection portion 64 is preferably larger than the radius RBs of the arc representing the contour of the outer portion 70 of the bottom portion 66. Accordingly, the circumferential narrow groove 44 can sufficiently exhibit its function. From this viewpoint, the ratio RT/RBs of the radius RT to the radius RBs is preferably 1.1 or more and 2.5 or less and more preferably 1.5 or more and 2.0 or less.

The ratio DHB/DGh of the depth DHB of the body portion 46 to the depth DGh of the circumferential narrow groove 44 is preferably 0.20 or more and 0.60 or less.

When the ratio DHB/DGh is set to 0.20 or more, the groove depth DHB of the body portion 46 is appropriately maintained. When the tread 4 comes into contact with a road surface and becomes deformed, the pair of wall surfaces 44S of the circumferential narrow groove 44 can come into sufficient contact with each other at the narrow groove portion 48. The tire 2 can further improve block chipping resistance. From this viewpoint, the ratio DHB/DGh is more preferably 0.25 or more and further preferably 0.30 or more.

When the ratio DHB/DGh is set to 0.60 or less, the widened portion 60 having the required groove volume can be configured in the tire 2. The exposed widened portion 60 can effectively contribute to suppressing a decrease in wet performance. From this viewpoint, the ratio DHB/DGh is more preferably 0.55 or less and further preferably 0.50 or less.

From the viewpoint that the widened portion 60 can effectively contribute to suppressing a decrease in wet performance, the ratio DHX/DGh of the groove depth DHX from the groove opening 44M of the circumferential narrow groove 44 to the position PX where the widened portion 60 has the maximum width WHX, to the groove depth DGh of the circumferential narrow groove 44, is preferably 0.65 or more and 0.85 or less and more preferably 0.70 or more and 0.80 or less.

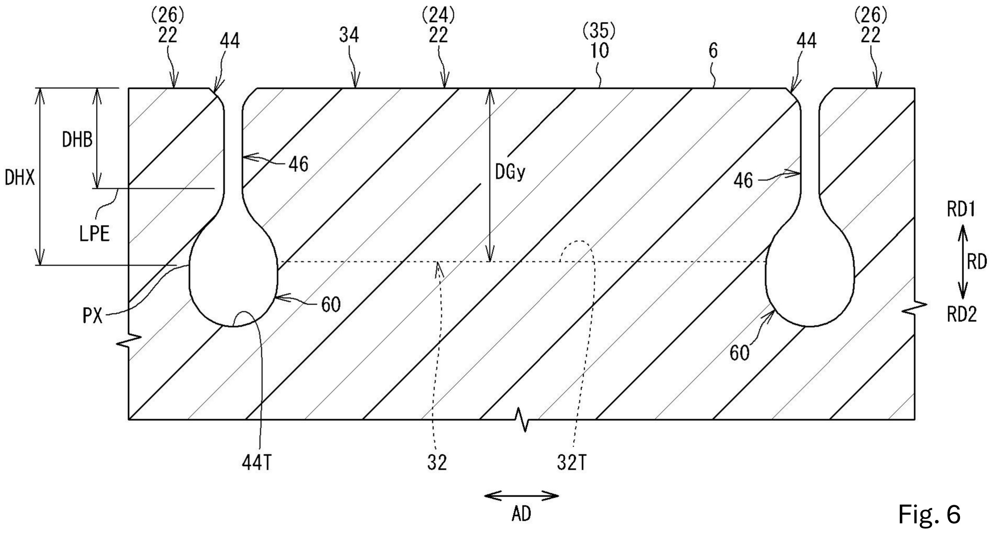

FIG. 6 shows a part of a cross-section of the center portion 28. FIG. 6 shows a cross-section of a portion where the main center land portion 24 is provided.

The center land portions 22 of the tire 2 include the lateral grooves 32. As described above, when the narrow groove portion 48 disappears due to wear, the widened portion 60, which is wider than the narrow groove portion 48, becomes exposed. In particular, the coexistence of the lateral grooves 32 and the widened portions 60 in the worn tread surface 6 may influence achievement of both wet performance and quietness after the maximum width position PX of the widened portion 60 is exposed.

However, in the tire 2, the depth of each lateral groove 32 is adjusted such that the depth DHB of the body portion 46 of the circumferential narrow groove 44, the depth DGy of the lateral groove 32, and the depth DHX from the groove opening 44M of the circumferential narrow groove 44 to the position PX where the widened portion 60 has the maximum width WHX satisfy the following formula.

$$DHB \leq DGy \leq DHX$$

Accordingly, in the process in which the width of the widened portion 60 increases from when the widened portion 60 becomes exposed due to wear until the maximum width position PX of the widened portion 60 becomes exposed, each lateral groove 32 can effectively contribute to achieving both wet performance and quietness. After the maximum width position PX of the widened portion 60 becomes exposed and each lateral groove 32 disappears, the widened portion 60 can contribute to suppressing a decrease in wet performance. Since the stiffness of the center land portion 22 is appropriately maintained when the lateral groove 32 disappears, good quietness is also maintained. The tire 2 can maintain good wet performance and good quietness even in a worn state. From this viewpoint, it is preferable that the depth DHB, the depth DGy, and the depth DHX satisfy the formula described above.

From the same viewpoint, it is more preferable that the depth DHB, the depth DGy, and the depth DHX satisfy the following formula.

$$DHB \leq DGy < DHX$$

Further preferably, the depth DHB, the depth DGy, and the depth DHX satisfy the following formula.

$$DHB < DGy < DHX$$

As is obvious from the above description, according to the present invention, a heavy duty tire that can achieve improvement of block chipping resistance while achieving both wet performance and quietness, is obtained.

The above-described technology capable of achieving improvement of block chipping resistance while achieving both wet performance and quietness can be applied to various tires.

[Additional Note]

The present invention includes aspects described below.

[1] A heavy duty tire including a tread configured to come into contact with a road surface, wherein

the tread has a plurality of circumferential grooves aligned in an axial direction,
the plurality of circumferential grooves include two shoulder circumferential grooves located on outermost sides in the axial direction, and one or more center circumferential grooves located between the two shoulder circumferential grooves,

a portion of the tread between the two shoulder circumferential grooves is a center portion,

the center portion includes a plurality of center land portions separated by the one or more center circumferential grooves,

each of the plurality of center land portions includes a plurality of lateral grooves traversing the center land portion,

the plurality of lateral grooves are aligned in a circumferential direction in each of the center land portions,

each of the plurality of lateral grooves has a first end located on one side in the circumferential direction and a second end located on another side in the circumferential direction,

the plurality of lateral grooves are arranged in the center portion such that a reference lateral groove located on the one side in the circumferential direction and a corresponding lateral groove located on the other side in the circumferential direction, constitute one lateral groove pair,

the second end of the reference lateral groove and the first end of the corresponding lateral groove in the lateral groove pair are at the same position in the circumferential direction,

at least one of the one or more center circumferential grooves is a circumferential narrow groove,

the circumferential narrow groove includes a body portion including a groove opening of the circumferential narrow groove,

the body portion includes a narrow groove portion, and

a pair of wall surfaces of the circumferential narrow groove come into contact with each other at the narrow groove portion when the tread comes into contact with a road surface and becomes deformed.

[2] The heavy duty tire according to [1] above, wherein the reference lateral groove and the corresponding lateral groove constituting the lateral groove pair are provided in the center land portions different from each other.

[3] The heavy duty tire according to [1] or [2] above, wherein

the lateral grooves are inclined with respect to the circumferential direction, and

an inclination angle of each of the lateral grooves with respect to the circumferential direction is 55 degrees or more and 85 degrees or less.

[4] The heavy duty tire according to any one of [1] to [3] above, wherein

the tread has a tread pattern formed by forming grooves including the plurality of circumferential grooves and the plurality of lateral grooves, on the tread,

the tread pattern includes a plurality of pitch patterns aligned in the circumferential direction, and

one of the lateral grooves is provided in each of the plurality of center land portions included in each of the pitch patterns.

[5] The heavy duty tire according to any one of [1] to [4] above, wherein the lateral grooves provided in one of two adjacent center land portions and the lateral grooves provided in the other of the two adjacent center land portions are arranged alternately in the circumferential direction.

[6] The heavy duty tire according to any one of [1] to [5] above, wherein the lateral grooves are sipes.

[7] The heavy duty tire according to any one of [1] to [6] above, wherein

each of the center land portions includes a plurality of blocks separated by the plurality of lateral grooves,

each of the plurality of blocks includes an acute corner portion formed by the lateral groove intersecting the circumferential groove at an acute angle, and

the acute corner portion has an inclined surface that is connected to a top surface of the block and is inclined with respect to the top surface.

[8] The heavy duty tire according to any one of [1] to [7] above, wherein

the body portion includes a tapered portion including the groove opening,

the narrow groove portion is located radially inward of the tapered portion, and

the tapered portion is tapered from the groove opening toward the narrow groove portion.

[9] The heavy duty tire according to any one of [1] to [8] above, wherein

the circumferential narrow groove includes a widened portion located radially inward of the body portion, and

the circumferential narrow groove has a minimum width at the narrow groove portion and has a maximum width at the widened portion.

[10] The heavy duty tire according to [9] above, wherein a depth DHB of the body portion, a depth DGy of the lateral groove, and a depth DHX from the groove opening to a position where the widened portion has the maximum width satisfy the following formula,

$$DHB \le DGy \le DHX.$$

**Claims**

1. A heavy duty tire (2) comprising a tread (4) configured to come into contact with a road surface, wherein

    the tread (4) has a plurality of circumferential grooves (12) aligned in an axial direction,
    the plurality of circumferential grooves (12) include two shoulder circumferential grooves (14, 14a, 14b) located on outermost sides in the axial direction, and one or more center circumferential grooves (16, 16a, 16b, 16c) located between the two shoulder circumferential grooves (14, 14a, 14b),
    a portion of the tread (4) between the two shoulder circumferential grooves (14, 14a, 14b) is a center portion (28),
    the center portion (28) includes a plurality of center land portions (22, 22a, 22b, 22c) separated by the one or more center circumferential grooves (16, 16a, 16b, 16c),
    each of the plurality of center land portions (22, 22a, 22b, 22c) includes a plurality of lateral grooves (32, 32a, 32b, 32c) traversing the center land portion (22, 22a, 22b, 22c),
    the plurality of lateral grooves (32, 32a, 32b, 32c) are aligned in a circumferential direction in each of the center land portions (22, 22a, 22b, 22c),
    each of the plurality of lateral grooves (32, 32a, 32b, 32c) has a first end (Ef) located on one side in the circumferential direction and a second end (Es) located on another side in the circumferential direction,
    the plurality of lateral grooves (32, 32a, 32b, 32c) are arranged in the center portion (28) such that a reference lateral groove located on the one side in the circumferential direction and a corresponding lateral groove located on the other side in the circumferential direction, constitute one lateral groove pair,
    the second end (Es) of the reference lateral groove and the first end (Ef) of the corresponding lateral groove in the lateral groove pair are at the same position in the circumferential direction,
at least one of the one or more center circumferential grooves (16, 16a, 16b, 16c) is a circumferential narrow groove (44),
the circumferential narrow groove (44) includes a body portion (46) including a groove opening (44M) of the circumferential narrow groove (44),
the body portion (46) includes a narrow groove portion (48), and
a pair of wall surfaces (44S) of the circumferential narrow groove (44) come into contact with each other at the narrow groove portion (48) when the tread (4) comes into contact with a road surface and becomes deformed.

2. The heavy duty tire (2) according to claim 1, wherein the reference lateral groove and the corresponding lateral groove constituting the lateral groove pair are provided in the center land portions (22, 22a, 22b, 22c) different from each other.

3. The heavy duty tire (2) according to claim 1 or 2, wherein

    the lateral grooves (32, 32a, 32b, 32c) are inclined with respect to the circumferential direction, and
    an inclination angle ($\theta$, $\theta m$, $\theta s$, $\theta sm$, $\theta ss$) of each of the lateral grooves (32, 32a, 32b, 32c) with respect to the circumferential direction is 55 degrees or more and 85 degrees or less.

4. The heavy duty tire (2) according to any one of claims 1 to 3, wherein

    the tread (4) has a tread pattern formed by forming grooves (8) including the plurality of circumferential grooves (12) and the plurality of lateral grooves (32, 32a, 32b, 32c), on the tread (4),
    the tread pattern includes a plurality of pitch patterns (50) aligned in the circumferential direction, and
    one of the lateral grooves (32, 32a, 32b, 32c) is provided in each of the plurality of center land portions (22, 22a, 22b, 22c) included in each of the pitch patterns (50).

5. The heavy duty tire (2) according to any one of claims 1 to 4, wherein the lateral grooves (32, 32a, 32b, 32c) provided in one of two adjacent center land portions (22, 22a, 22b, 22c) and the lateral grooves (32, 32a, 32b, 32c) provided in the other of the two adjacent center land portions (22, 22a, 22b, 22c) are arranged alternately in the circumferential direction.

**6.** The heavy duty tire (2) according to any one of claims 1 to 5, wherein the lateral grooves (32, 32a, 32b, 32c) are sipes.

**7.** The heavy duty tire (2) according to any one of claims 1 to 6, wherein

each of the center land portions (22, 22a, 22b, 22c) includes a plurality of blocks (34) separated by the plurality of lateral grooves (32, 32a, 32b, 32c),
each of the plurality of blocks (34) includes an acute corner portion (38) formed by the lateral groove (32, 32a, 32b, 32c) intersecting the circumferential groove (12) at an acute angle, and the acute corner portion (38) has an inclined surface (56) that is connected to a top surface (35) of the block (34) and is inclined with respect to the top surface (35).

**8.** The heavy duty tire (2) according to any one of claims 1 to 7, wherein

the body portion (46) includes a tapered portion (58) including the groove opening (44M),
the narrow groove portion (48) is located radially inward of the tapered portion (58), and
the tapered portion (58) is tapered from the groove opening (44M) toward the narrow groove portion (48).

**9.** The heavy duty tire (2) according to any one of claims 1 to 8, wherein

the circumferential narrow groove (44) includes a widened portion (60) located radially inward of the body portion (46), and
the circumferential narrow groove (44) has a minimum width (WHN) at the narrow groove portion (48) and has a maximum width (WHX) at the widened portion (60).

**10.** The heavy duty tire (2) according to claim 9, wherein a depth DHB of the body portion (46), a depth DGy of the lateral groove (32, 32a, 32b, 32c), and a depth DHX from the groove opening (44M) to a position where the widened portion (60) has the maximum width (WHX) satisfy the following formula,

$$DHB \leq DGy \leq DHX.$$

Fig. 1

EP 4 768 280 A1

Fig. 2

Fig. 3

Fig. 4

Fig. 5

Fig. 6

## EUROPEAN SEARCH REPORT

**Application Number**

EP 25 20 7478

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 420 898 A1 (SUMITOMO RUBBER IND [JP]) 28 August 2024 (2024-08-28) * paragraph [0152]; figure 1 * | 1-10 | INV. B60C11/03 B60C11/12 B60C11/13 |
| X | EP 2 474 428 A1 (BRIDGESTONE CORP [JP]) 11 July 2012 (2012-07-11) * figure 2; table 1 * | 1-7 | |
| X | WO 2019/092365 A1 (MICHELIN & CIE [FR]) 16 May 2019 (2019-05-16) * paragraphs [0104] - [0107]; figures 1,2 * | 1-6,8-10 | |
| X | WO 2014/185121 A1 (SUMITOMO RUBBER IND [JP]) 20 November 2014 (2014-11-20) * paragraph [0020]; figures 1,3 * | 1,2,4,5 | |
| X | EP 4 119 358 A1 (SUMITOMO RUBBER IND [JP]) 18 January 2023 (2023-01-18) * figure 4 * | 1,2,4-10 | |

**TECHNICAL FIELDS SEARCHED (IPC)**

B60C

The present search report has been drawn up for all claims

| Place of search | Date of completion of the search | Examiner |
|---|---|---|
| Munich | 2 March 2026 | Brito, Fernando |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 7478

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2026

| Patent document cited in search report | | Publication date | Patent family member(s) | | Publication date |
|---|---|---|---|---|---|
| EP 4420898 | A1 | 28-08-2024 | EP | 4420898 A1 | 28-08-2024 |
| | | | JP | 2024118533 A | 02-09-2024 |
| EP 2474428 | A1 | 11-07-2012 | CN | 102582372 A | 18-07-2012 |
| | | | EP | 2474428 A1 | 11-07-2012 |
| | | | JP | 5771398 B2 | 26-08-2015 |
| | | | JP | 2012144118 A | 02-08-2012 |
| | | | US | 2012175031 A1 | 12-07-2012 |
| WO 2019092365 | A1 | 16-05-2019 | CN | 111295299 A | 16-06-2020 |
| | | | EP | 3707013 A1 | 16-09-2020 |
| | | | US | 2021178828 A1 | 17-06-2021 |
| | | | WO | 2019092365 A1 | 16-05-2019 |
| WO 2014185121 | A1 | 20-11-2014 | CN | 105189146 A | 23-12-2015 |
| | | | EP | 2990234 A1 | 02-03-2016 |
| | | | JP | 6130911 B2 | 17-05-2017 |
| | | | JP | 6378799 B2 | 22-08-2018 |
| | | | JP | 2017165406 A | 21-09-2017 |
| | | | JP | WO2014185121 A1 | 23-02-2017 |
| | | | US | 2016082779 A1 | 24-03-2016 |
| | | | WO | 2014185121 A1 | 20-11-2014 |
| EP 4119358 | A1 | 18-01-2023 | EP | 4119358 A1 | 18-01-2023 |
| | | | US | 2023023252 A1 | 26-01-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023146910 A